# EUROPEAN PATENT APPLICATION

(11) **EP 1 637 573 A1**
(43) Date of publication of application: **22.03.2006**
(21) Application number: 04746686.7
(22) Date of filing: 23.06.2004
(51) Int. Cl.: C09K 19/34, C09K 9/02, G03C 1/73

(54) **OPTICAL RECORDING MATERIAL**

(30) Priority: 24.06.2003 JP 2003180090
(71) Applicant: ASAHI GLASS COMPANY LTD., Tokyo 100-8405 (JP)
(72) Inventor: YAMAMOTO, Yuji; c/o Asahi Glass Company, Limited, Yokohama-shi, Kanagawa; 2218755 (JP); KAIDA, Yuriko; c/o Asahi Glass Company, Limited, Yokohama-shi, Kanagawa; 2218755 (JP); ONO, Motoshi; c/o Asahi Glass Company, Limited, Yokohama-shi, Kanagawa; 2218755 (JP); SAKAMOTO, Hiroshi; c/o Asahi Glass Company, Ltd., Yokohama-shi, Kanagawa; 2218755 (JP); SAKURAI, Hiromi; c/o Asahi Glass Company, Limited, Yokohama-shi, Kanagawa; 2218755 (JP)
(74) Representative: Müller-Boré & Partner Patentanwälte
(86) International application number: PCT/JP2004/009217
(87) International publication number: WO 2004/113469

(57) **Abstract**

A novel photochromic liquid crystal comprising a diarylethene compound having both photochromic properties and liquid crystallinity. This compound is a photochromic diarylethene compound having a mesogen group in each of the two aryl groups.

The photochromic liquid crystal provides a large change in birefringence by photoisomerization or phase transition, and has high durability against repeated changes in birefringence.

A side-chain polymer liquid crystal containing the above photochromic liquid crystal is useful as an optical recording material. Such an optical recording material is capable of performing light modulation by irradiation with light near Tc thereof, and is applicable to photo operator devices, optical memories, and the like. Further, the optical recording material is useful as a material for a recording layer of an optical recording medium such as an optical disk or an optical memory card.

## Description

### TECHNICAL FIELD

The present invention relates to a diarylethene compound exhibiting liquid crystallinity and a side-chain polymer liquid crystal containing it, and a novel optical recording material for recording and reproducing information signals, utilizing a change in alignment accompanying photoisomerization of a side-chain polymer liquid crystal having a diarylethene compound. Further, the present invention relates to an optical recording medium having a recording layer comprising the optical recording material.

### BACKGROUND ART

It has been attempted to record information signals by a change in alignment caused by photoisomerization of a liquid crystalline photochromic material. A change in birefringence derived from a change in alignment of a liquid crystal has been known to be very large. Among changes in alignment, a change accompanied by a phase change provides a larger change in birefringence. Accordingly, optically phase-changeable liquid crystalline photochromic materials such as azobenzene and spiropyran are expected as novel optical recording materials (e.g. JP-A-2001-265199, JP-A-11-256147).

However, a conventional liquid crystalline photochromic material has had such drawbacks that it has low durability against repeated use and low thermal irreversibility and thereby deteriorates by several times of repeated recording and erasing, and no more provides photochromic properties.

On the other hand, as a diarylethene compound is a photochromic material which is isomerized in a photon mode and is excellent in durability against repeated use, an optical recording medium employing such a diarylethene compound has been proposed (e.g. JP-A-5-216183, WO03/021350). A conventional diarylethene compound is in an amorphous or crystalline state, and in such a case, optical recording has been attempted, which utilizes a difference in refractive index between isomers by photoisomerization, not the above change in birefringence accompanying optical phase change. However, no large difference has been obtained in some cases if the difference in refractive index between isomers is utilized.

### DISCLOSURE OF THE INVENTION

The present invention provides a novel photochromic liquid crystal employing a diarylethene compound, which has high durability against repeated use, and of which the change in birefringence by photoisomerization or the change in birefringence by phase transition is large, an optical recording material employing such a photochromic liquid crystal, and an optical recording medium having a recording layer comprising such an optical recording material.

The present inventors have conducted extensive studies to solve problems of conventional optical recording materials and as a result, found that a specific diarylethene compound exhibits liquid crystallinity, and its clearing point (Tc) changes by photoisomerization, whereby it can be used as a photochromic liquid crystal useful for a rewritable optical recording material. The present invention has been accomplished on the basis of this discovery.

Namely, the present invention provides the following (1) to (7) :
(1) A photochromic liquid crystal which comprises a photochromic diarylethene compound having a mesogen group in each of the two aryl groups and which has liquid crystallinity.
(2) The photochromic liquid crystal according to the above (1), of which the clearing point (Tc) changes by photoisomerization.
(3) The photochromic liquid crystal according to the above (1), of which the alignment changes by photoisomerization.
(4) The photochromic liquid crystal according to any one of the above (1) to (3), wherein the photochromic diarylethene compound is represented by the following formula (1) : 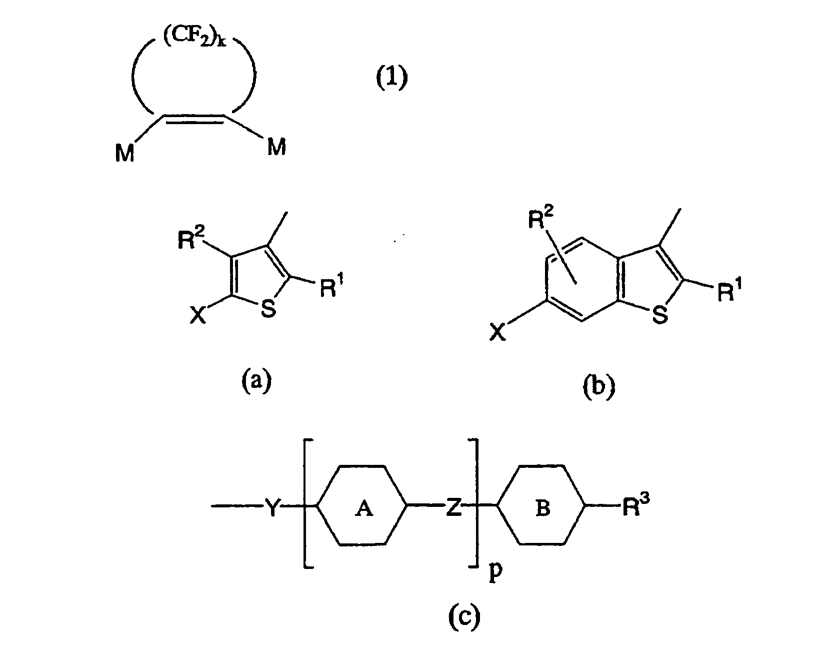 in the formula (1), each M represents the above formula (a) or the formula (b), and k is an integer of from 3 to 6, provided that X represents the above formula (c), R¹ represents an alkyl group which may have a substituent or an alkoxy group which may have a substituent, R² represents a hydrogen atom, a cyano group, a nitro group, an alkyl group which may have a substituent, or an alkoxy group which may have a substituent, R³ represents a C₄-C₁₂ alkyl group which may have a substituent, or a C₄-C₁₂ alkoxy group which may have a substituent, Y represents a single bond,-COO-, -OCO-, -CH=CH-, -CF=CF- or -C ≡ C-, Z represents a single bond, -CH=CH-, -CF=CF- or -C≡C-, each of A and B which are independent of each other, represents a phenylene ring, a trans-cyclohexylene ring or a nitrogen-containing hetero 6-membered ring, which may have a substituent, and p represents 1 or 2.
(5) The photochromic liquid crystal according to the above (4), wherein in the formula (1), each of A and B is a phenylene ring which may have a substituent, and each of Y and Z is a single bond.
(6) An optical recording material comprising a side-chain polymer liquid crystal containing the photochromic liquid crystal as defined in any one of the above (1) to (5).
(7) An optical recording medium having a recording layer comprising the optical recording material as defined in the above (6), having alignment treatment applied in a uniaxial direction.

### BRIEF DESCRIPTION OF THE DRAWINGS

Fig. 1 is a cross-sectional view schematically illustrating one example of the optical recording medium of the present invention.
Fig. 2 is a graph illustrating a change in absorption spectrum between before and after irradiation of the diarylethene compound (I) obtained in Example 1 with ultraviolet light.
Fig. 3 is a graph illustrating a change in absorption spectrum between before and after irradiation of the diarylethene compound (III) obtained in Example 6 with ultraviolet light.
Fig. 4 is a graph illustrating a change in absorption spectrum between before and after irradiation of the diarylethene compound (II) obtained in Comparative Example 1 with ultraviolet light.

### BEST MODE FOR CARRYING OUT THE INVENTION

Now, the present invention will be explained in detail below. First, the photochromic liquid crystal of the present invention will be explained below.

The photochromic liquid crystal of the present invention comprises a photochromic diarylethene compound having a mesogen group in each of the two aryl groups and has liquid crystallinity.

The photochromic diarylethene compound (hereinafter sometimes referred to simply as "diarylethene compound") to be used in the present invention is a compound having an aryl group on each side of an ethenylene group (>C=C<), and carbon atoms (β position) adjacent to carbon atoms (α position) of the aryl groups bonded to the ethenylene group are connected by the action of light (i.e. they form a ring containing an ethenylene group), whereby the compound exhibits photochromic properties. In this case, it is preferred that groups other than hydrogen atoms (such as cyano groups or alkyl groups) are bonded to the other two bonds of the ethenylene group, and it is particularly preferred that a divalent group is bonded to the two bonds to form a ring containing an ethenylene group. The ring containing an ethenylene group is preferably a 5- to 8-membered carbon ring which may contain a hetero atom, and the hetero atom is preferably a nitrogen atom or an oxygen atom. The ring is preferably a 5-membered ring or a 6-membered ring. The number of hetero atoms is preferably 1 or 2. The hydrogen atoms bonded to the ring may be substituted by a substituent such as a halogen atom such as a fluorine atom or a chlorine atom or an oxygen atom (oxo group), and they are particularly preferably substituted by fluorine atoms. The ring is preferably a cyclopentene ring, a cyclohexene ring, a dioxole ring or a maleimide ring, which may be substituted by a halogen atom, particularly preferably a polyfluorocyclopentene ring or a polyfluorocyclohexene ring, and most preferably a perfluorocyclopentene ring.

Each of the aryl groups in the diarylethene compound is preferably an indol-3-yl group, a thiophen-3-yl group, a benzo[b]thiophen-3-yl group or the like. Each of the two aryl groups in the diarylethene compound has a mesogen group.

The aryl group preferably has a substituent in addition to the mesogen group, and it is particularly preferred that the 2-position carbon atom (the above β-position carbon atom) has a substituent such as an alkyl group or an alkoxy group. The aryl group in the diarylethene compound may have various substituents in addition to the above substituent.

The two aryl groups having a mesogen group bonded thereto in the diarylethene compound may be the same or different. However, the diarylethene compound preferably has a symmetric molecular structure in order that the diarylethene compound exhibits liquid crystallinity.

The mesogen group in the present invention is a monovalent linear organic group to exhibit liquid crystallinity, and is a monovalent linear organic group having two or more 6-membered rings connected via a connecting group and having a terminal group. The mesogen group is bonded to the aryl group via a spacer. The spacer and the connecting group may be a single bond. For example, in a compound represented by the above formula (1), the monovalent linear organic group represented by the above formula (c) (excluding Y) is a mesogen group, and the compound has two or more 6-membered rings (A, B) connected via a connecting group (Z) and has a terminal group (R³). Further, the mesogen group has, at its aryl group's side, a bivalent spacer (Y) which is bonded to the aryl group. The mesogen group is preferably -Φ¹-E-Φ²-R⁵ as described hereinafter, particularly preferably a group represented by the above formula (c) (excluding Y). The spacer is preferably -(CH₂)ₙ-D- in the formula (6) as described hereinafter, particularly preferably Y in the group represented by the above formula (c). The number of 6-membered rings in the mesogen group is preferably from 2 to 4, particularly preferably 2 or 3. The 6-membered rings are preferably rings A and B as described hereinafter.

In the present invention, the diarylethene compound is particularly preferably a compound represented by the following formula (1): 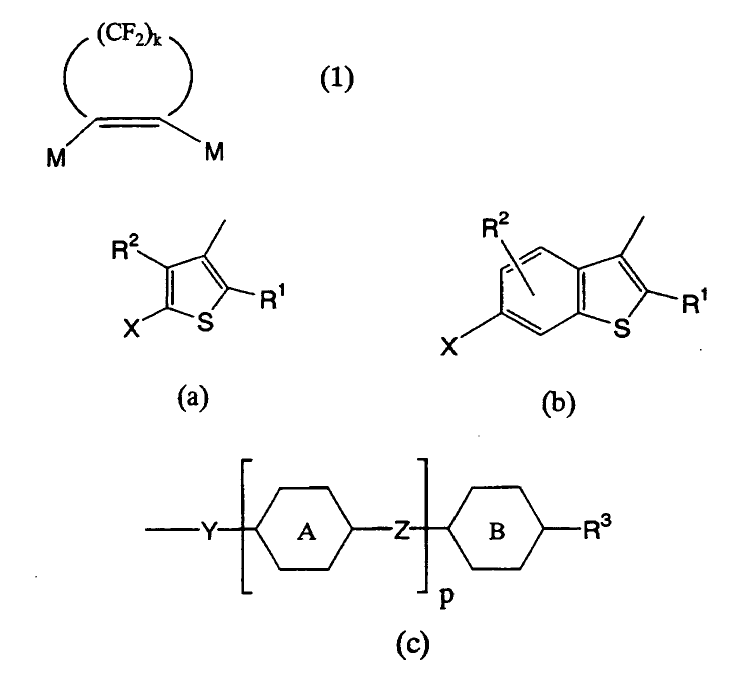 in the formula (1), each M represents the above formula (a) or the formula (b), and k is an integer of from 3 to 6, provided that X represents the above formula (c), R¹ represents an alkyl group which may have a substituent or an alkoxy group which may have a substituent, R² represents a hydrogen atom, a cyano group, a nitro group, an alkyl group which may have a substituent, or an alkoxy group which may have a substituent, R³ represents a C₄-C₁₂ alkyl group which may have a substituent, or a C₄-C₁₂ alkoxy group which may have a substituent, Y represents a single bond, -COO-, -OCO-, -CH=CH-, -CF=CF- or -C≡C-, Z represents a single bond, -CH=CH-, -CF=CF- or -C ≡ C-, each of A and B which are independent of each other, represents a phenylene ring, a trans-cyclohexylene ring or a nitrogen-containing hetero 6-membered ring, which may have a substituent, and p represents 1 or 2.

Y is preferably a single bond, -COO- or -OCO-.

Z is preferably a single bond or -C≡C-.

R¹ is preferably an alkyl group or alkoxy group having at most 10 carbon atoms, and such a group may have a substituent such as a halogen atom such as a fluorine atom or a chlorine atom, a hydroxyl group, an amino group or a carboxyl group. It is preferably an alkyl group or haloalkyl group having at most 4 carbon atoms, or an alkoxy group or haloalkoxy group having at most 4 carbon atoms, and most preferably an alkyl group or alkoxy group having 1 or 2 carbon atoms.

R² is preferably a hydrogen atom, an alkyl group which may have a substituent or an alkoxy group which may have a substituent, such an alkyl group or alkoxy group preferably has at most 20 carbon atoms, and the substituent is preferably a halogen atom such as a fluorine atom or a chlorine atom, a hydroxyl group, an amino group, a carboxyl group, an epoxy group or the like. It is particularly preferably an alkyl group, a haloalkyl group, a hydroxyalkyl group, an alkoxy group, a hydroxyalkoxy group or the like, having at most 10 carbon atoms.

R³ is preferably an alkyl group or alkoxy group having from 6 to 12 carbon atoms, and such a group may have a substituent such as a halogen atom such as a fluorine atom or a chlorine atom, a hydroxyl group, an amino group or a carboxyl group. It is more preferably an alkyl group or alkoxy group having from 6 to 10 carbon atoms, most preferably a linear alkyl group or linear alkoxy group having from 6 to 10 carbon atoms.

Each of the rings A and B which are independent of each other, is preferably a trans-1,4-cyclohexylene group, a 1,4-phenylene group, a pyridine-2,5-diyl group, a pyrimidine-2,5-diyl group, a pyrazine-2,5-diyl group, a pyridazine-3,6-diyl group or a trans-1,3-dioxane-2,5-diyl group. Each of the rings A and B may be substituted by a methyl group, a methoxy group, a trifluoromethyl group, a fluorine atom, a chlorine atom or a bromine atom. The ring is more preferably a non-substituted 1,4-phenylene group.

k is preferably 3 or 4.

It is particularly preferred that each of the rings A and B is a phenylene ring which may have a substituent, and that each of Y and Z is a single bond.

The temperature range (melting point (Tm) to Tc) at which liquid crystallinity is exhibited, preferably Tc, of the diarylethene compound to be used in the present invention, changes by photoisomerization. The diarylethene compound is irradiated with light at a temperature at which the phases of the isomers are different, to isomerize the diarylethene compound thereby to cause phase change, and a portion which have undergone the phase change is kept in the diarylethene compound as a record. Further, the record is reproduced by detecting the portion which have undergone the phase change, and the record is erased by erasing the portion which have undergone the phase change.

In a case where recording is carried out (information signals are written) employing the phase change of the diarylethene compound, it is carried out preferably under conditions where the diarylethene compound is likely to undergo the phase change, and accordingly it is carried out preferably at a temperature relatively near Tc in a temperature range where the phases of the isomers are different. In a case where the record is reproduced (information signals are read), it is carried out preferably under conditions where the portion which have undergone the phase change is hardly changed again, and accordingly it is carried out preferably at the same temperature as for the recording. In a case where the record is erased, it is carried out preferably by erasing the phase change by holding the compound at a temperature of Tc or higher for a certain time. The higher the temperature above Tc, the shorter the erasing time.

The photochromic liquid crystal of the present invention is preferably such that its alignment changes by photoisomerization. The stereostructure of the diarylethene compound to be used in the present invention changes by photoisomerization. The diarylethene compound to be used in the present invention is in a uniaxially aligned state at a temperature at which the liquid crystallinity is exhibited, and as the isomers have different stereostructures, the degrees how they are aligned (hereinafter also referred to as degree of alignment) are different. Accordingly, when the diarylethene compound is irradiated with light at a temperature at which liquid crystallinity is exhibited to isomerize the diarylethene compound, a change in alignment occurs, and a portion which have undergone the change in alignment remains as a record in the diarylethene compound. Further, the record is reproduced by detecting the portion which have undergone the change in alignment, and the record is erased by erasing the portion which have undergone the change in alignment.

In a case where recording is carried out (information signals are written) by employing the change in alignment of the diarylethene compound, it is carried out preferably under conditions where the diarylethene compound is likely to undergo a change in alignment, preferably at a temperature at which liquid crystallinity is exhibited, and more preferably in a supercooled liquid crystal state at room temperature. In a case where the record is reproduced (the information is read), it is carried out preferably under conditions where the portion which have undergone the change in alignment is hardly changed again, and accordingly it is carried out preferably at the same temperature as for the recording. In a case where the record is erased, it is carried out preferably by erasing the change in alignment by holding the compound at a temperature of Tc or higher for a certain time. The higher the temperature above Tc, the shorter the erasing time.

The photochromic liquid crystal of the present invention is suitably used for the optical recording material of the present invention as described hereinafter, but its application is not particularly limited. Further, the photochromic liquid crystal of the present invention by itself may be used as an optical recording material.

Now, the optical recording material of the present invention will be explained below.

The optical recording material of the present invention is an optical recording material comprising a side-chain polymer liquid crystal containing the above-described photochromic liquid crystal of the present invention. It is obtained, for example, by dispersing, dissolving or bonding the above-described diarylethene compound in a side-chain polymer liquid crystal. Two or more types of side-chain polymer liquid crystals may be used in combination.

A side-chain polymer liquid crystal is a polymer exhibiting liquid crystallinity and having such a structure that mesogen groups exhibiting liquid crystallinity are bonded to the main chain via spacers. Such a polymer is obtained by polymerizing a compound having a polymerizable group bonded to a mesogen group via a spacer and exhibiting liquid crystallinity (hereinafter referred to as "liquid crystalline monomer"). The side-chain polymer liquid crystal may be a copolymer comprising two or more types of liquid crystalline monomers, or may be a copolymer of a liquid crystalline monomer with another monomer (a monomer exhibiting no liquid crystallinity). The copolymer of a liquid crystalline monomer with another monomer is required to exhibit liquid crystallinity. As another monomer, a monomer to introduce a connecting group may, for example, be mentioned. In the following description, the "side-chain polymer liquid crystal" will sometimes be referred to simply as a "polymer liquid crystal".

The liquid crystalline monomer may, for example, be a compound having as a polymerizable group a polymerizable unsaturated group which may undergo addition polymerization, a cyclic ether group (such as an epoxy group) which may undergo ring-opening addition polymerization, or a cyclic ester group or a bifunctional silyl group or the like. Further, the liquid crystalline monomer may be a condensation polymerizable monomer comprising a combination of a dicarboxylic acid compound and a diol compound which may form a polyester chain. Accordingly, the main chain of the polymer liquid crystal may, for example, be a polyoxyalkylene chain, a polyester chain or a polysiloxane chain in addition to the polyethylene chain formed by polymerization of polymerizable unsaturated groups.

The mesogen group in the polymer liquid crystal may, for example, be a group having a biphenyl skeleton, a phenyl benzoate skeleton, a cyclohexylbenzene skeleton, an azoxybenzene skeleton, an azomethine skeleton, a phenylpyrimidine skeleton, a biphenylbenzoate skeleton, a cyclohexylbiphenyl skeleton, a terphenyl skeleton or the like. The liquid crystalline monomer is a compound comprising such a mesogen group and a polymerizable group bonded via a spacer.

The monomer units of the liquid crystalline monomer in the polymer liquid crystal may, for example, be monomer units represented by the following formulae (2) to (5). R⁶ represents a hydrogen atom or a monovalent hydrocarbon group having at most 10 carbon atoms, each of m and n represents an integer of from 1 to 20, and r represents an integer of from 1 to 10. Φ¹, Φ², D, E, R⁴ and R⁵ will be described hereinafter. In the following formulae, R⁶ is preferably a hydrogen atom or an alkyl group having at most 4 carbon atoms, each of m and n is preferably an integer of from 2 to 6, and r is preferably an integer of from 1 to 8.

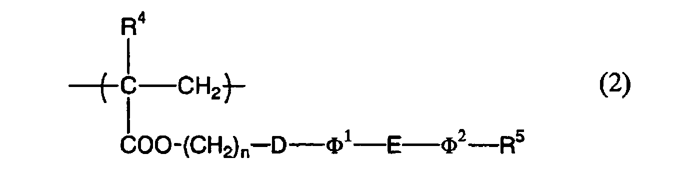

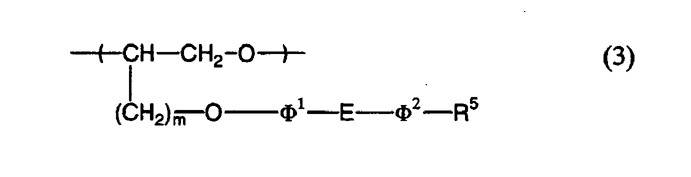

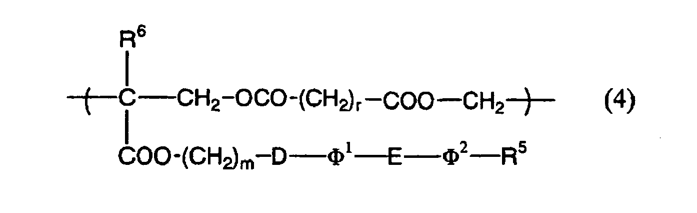

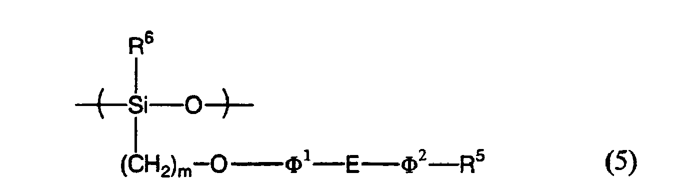

In the present invention, the liquid crystalline monomer to produce the polymer liquid crystal is preferably a liquid crystalline monomer represented by the following formula (6) providing monomer units represented by the above formula (2). This liquid crystalline monomer is an acrylate or a methacrylate having a mesogen group (hereinafter an acrylate and a methacrylate will generically be referred to as "(meth)acrylate"). The polymer liquid crystal is preferably a polymer having one or more types of (meth)acrylate units represented by the formula (6):

CH₂ =C(R⁴)COO-(CH₂)ₙ -D- Φ¹ -E- Φ² -R⁵ (6)

In the formula (6), R⁴ represents a hydrogen atom or a methyl group, R⁵ represents a hydrogen atom, an alkyl group, an alkoxy group, a carboxyl group, a chloroalkyl group, a fluoroalkoxy group, a cyano group or a halogen atom, each of D and E which are independent of each other, represent a single bond, -O-, -COO-, -OCO-, -CH=CH-, -CF=CF-, -CH=N-, -N=CH- or =C≡C-, and each of Φ¹ and Φ² which are independent of each other, represents any one of the following bivalent groups, and n represents an integer of from 0 to 30. In the following formulae, the bivalent group with H in a hexagon represents a trans-1,4-cyclohexylene group, Q represents a fluorine atom, a chlorine atom or a bromine atom, and each j independently represents an integer of from 0 to 4.

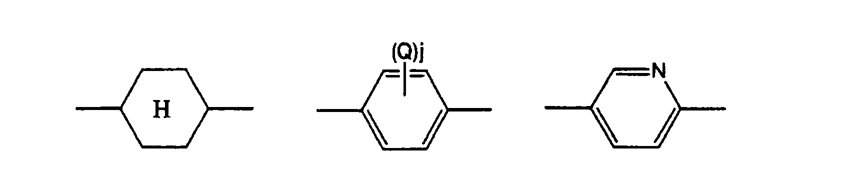

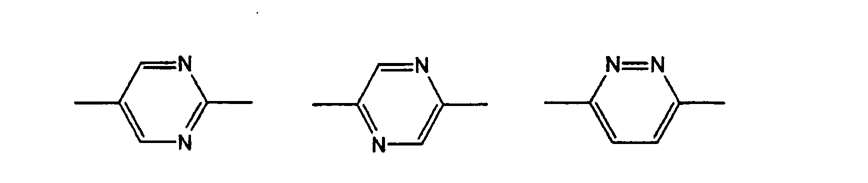

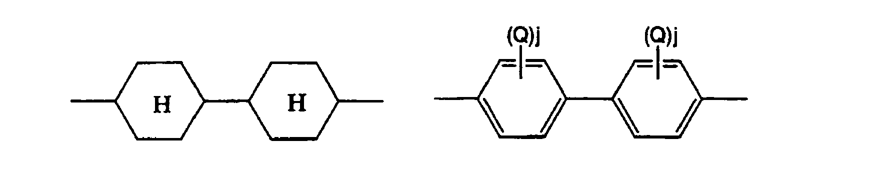

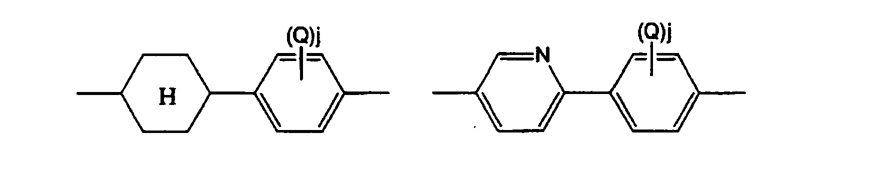

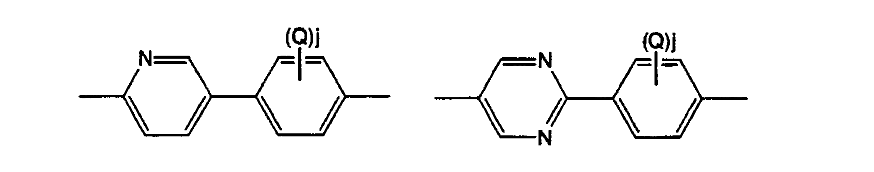

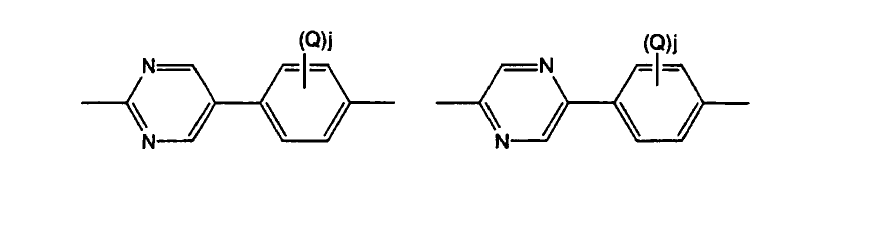

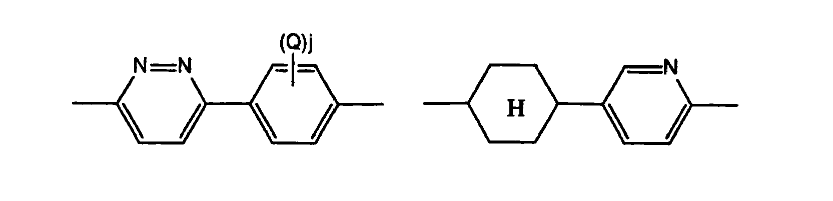

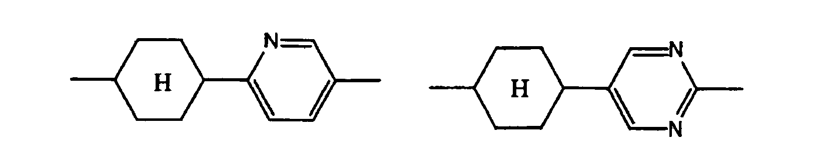

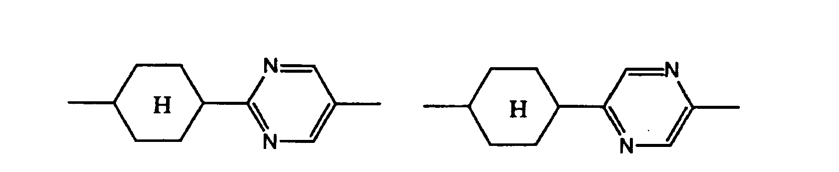

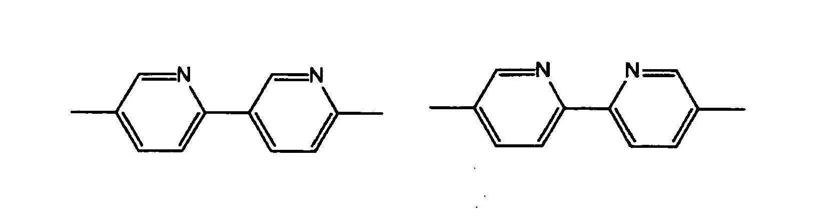

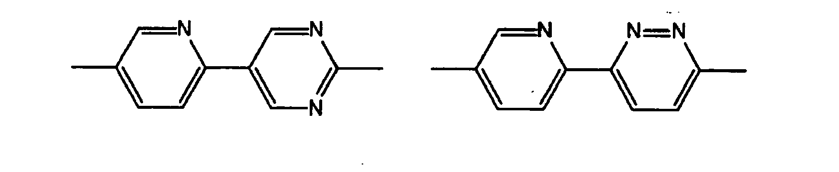

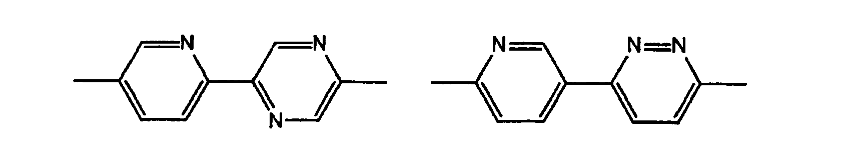

In the liquid crystalline monomer represented by the formula (6), R⁴ is preferably a hydrogen atom, D is preferably a single bond, -O-, -COO- or -OCO-, and n is preferably an integer of from 0 to 10. In a case where R⁵ is an alkyl group, an alkoxy group, a chloroalkyl group or a fluoroalkoxy group, it has preferably at most 20, particularly preferably at most 10 carbon atoms, and it is preferably linear. R⁵ is preferably a linear alkyl group having at most 10 carbon atoms, a cyano group or a fluorine atom.

As another liquid crystalline monomer, preferred is an addition polymerizable compound comprising a group having a vinylphenyl group, a vinyloxy group, an allyloxy group or another polymerizable unsaturated group comprising CH₂=CH-, and the above-mentioned -Φ¹-E-Φ²-R⁵ bonded via a connecting group.

The liquid crystalline monomer is polymerized in the same manner as of a conventional monomer to obtain a polymer liquid crystal. The polymerization method is not particularly limited, and for example, the liquid crystalline monomer represented by the above formula (6) may be polymerized by e.g. radical polymerization. Particularly preferred is a polymerization method by heating using a radical generator or a polymerization method by UV irradiation employing a photopolymerization initiator.

The optical recording material of the present invention can be obtained by mixing the above-described polymer liquid crystal with the photochromic liquid crystal of the present invention. For example, an optical recording material comprising a polymer liquid crystal containing a diarylethene compound can be produced by a method of removing a solvent from a solution having a polymer liquid crystal and a diarylethene compound dissolved therein. The mixing may be melt mixing.

Further, an optical recording material comprising a polymer liquid crystal containing a diarylethene compound can be produced similarly by polymerizing a mixture of a liquid crystalline monomer with a diarylethene compound. The polymerization is preferably photopolymerization.

The content of the diarylethene compound in the optical recording material of the present invention is preferably from 0.1 to 50 mass%, particularly preferably from 1 to 20 mass%, based on the total amount of the diarylethene compound and the polymer liquid crystal. If the proportion is less than 0.1 mass%, optical recording properties may be insufficient in some cases, and if it exceeds 50 mass%, liquid crystallinity of the polymer liquid crystal may be remarkably impaired in some cases.

The number average molecular weight of the polymer liquid crystal to be used in the present invention is preferably from 1,000 to 1,000,000, particularly preferably from 10,000 to 100,000. If the molecular weight is too low, material physical properties tend to be insufficient, and no durable film is less likely to be obtained. Further, if the molecular weight is too high, processability of the material in film formation or the like is likely to be impaired.

To the optical recording material of the present invention, an additive such as a stabilizer may be added. The stabilizer may, for example, be an antioxidant such as a hindered phenol type or a photostabilizer such as a hindered amine type or a benzotriazole type. The content of such an additive in the optical recording material is preferably at most 5 mass%.

The lower limit of the temperature at which the liquid crystallinity is exhibited of the optical recording material of the present invention is represented by the glass transition point (Tg), and the upper limit is represented by the clearing point (Tc). Tg of the optical recording material of the present invention is preferably at least 30°C, particularly preferably at least 50°C. If Tg is too low, the shape of the film can not be maintained, and problems are likely to arise such that durability of the recording layer decreases. Further, Tc is preferably at least 70°C, particularly preferably at least 120°C. If Tc is too low, the alignment state of the liquid crystal is not maintained, and problems are likely to arise such that the record holding properties decrease. The upper limit of Tc is not particularly limited, but if Tc is too high, the temperature at the time of recording tends to be too high (in a case of recording by irradiation with light at a temperature near Tc as mentioned hereinafter) and as a result, handling at the time of recording may be difficult. Accordingly, Tc is preferably at most 300°C, particularly preferably at most 250°C.

The optical recording material of the present invention is used preferably in the form of a thin film aligned in a uniaxial direction. The present invention provides an optical recording medium comprising the above optical recording material in the form of a thin film aligned in a uniaxial direction. Further, the optical recording material of the present invention is suitable as a material for a recording layer in an optical recording medium. Accordingly, the present invention further provides an optical recording medium having a recording layer comprising a thin film of the above optical recording material aligned in a uniaxial direction.

The alignment in a uniaxial direction of the optical recording material in the present invention may be carried out by a known method. For example, a thin film of the optical recording material aligned in a uniaxial direction can be formed by a method of annealing the optical recording material in such a state that it is in contact with an alignment film having an alignment treatment applied in a uniaxial direction within a temperature range where it exhibits liquid crystallinity (within a temperature range of from Tg to Tc) or a method of heating the optical recording material to a temperature of Tc and then slowly cooling it. The alignment film can be formed by using a known material such as a polyimide or a polyvinyl alcohol (PVA), and the film is aligned in a uniaxial direction e.g. by rubbing.

Otherwise, a thin film of the optical recording material aligned in a uniaxial direction can be formed by polymerizing a material of the optical recording material such as the above-mentioned liquid crystalline monomer in an aligned state (for example, in a state where it is in contact with an alignment film having an alignment treatment applied in a uniaxial direction) to form an optical recording material. For example, a thin film of the optical recording material aligned in a uniaxial direction can be formed by polymerizing a mixture of a monomer represented by the above formula (6) as a liquid crystalline monomer with a diarylethene compound represented by the above formula (1) in a state where the mixture is in contact with an alignment film. Particularly, it is preferred to form an aimed thin film by photopolymerizing the above mixture in a cell sandwiched between alignment films.

Further, it is possible to form a thin film of the optical recording material aligned in a uniaxial direction without using an alignment film. For example, alignment employing an external stress can be carried out employing a method of drawing the optical recording material or a method of subjecting it to injection molding.

The thickness of the thin film of the optical recording material aligned in a uniaxial direction is not particularly limited, but is preferably from 0.1 to 500 µm, particularly preferably from 1 to 100 µm.

Now, the structure of the optical recording medium of the present invention and its formation method will be explained below. The optical recording medium of the present invention is an optical recording medium having a recording layer comprising the optical recording material of the present invention, having alignment treatment applied in a uniaxial direction.

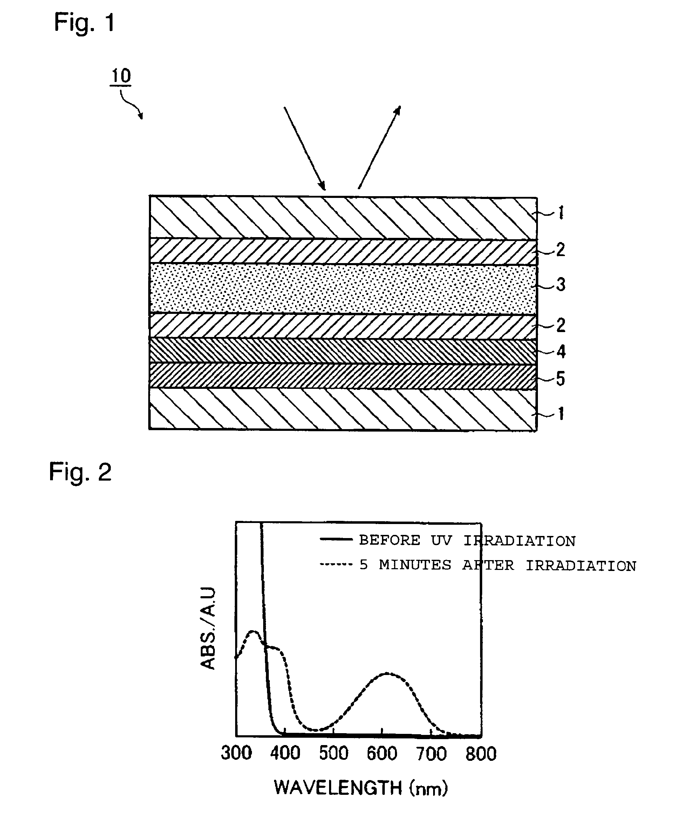

The optical recording medium is preferably one comprising a thin film of the optical recording material aligned in a uniaxial direction as a recording layer sandwiched between at least two substrates. An alignment film may be formed between the thin film of the optical recording material and the substrate, and a light reflecting layer may be formed on one substrate. Further, an antireflection film to prevent reflection on the outermost surface or an interference film to improve efficiency of an incident laser beam may be formed. As a material of the substrate to be used, a synthetic resin such as a polycarbonate, a polymethyl methacrylate or an amorphous olefin resin may be mentioned. Such a substrate is formed by injection molding, and guide grooves for tracking or pits such as address pits may be formed on its surface as the case requires. Further, a substrate made of an inorganic material such as glass may be used. Fig. 1 is a cross-sectional view schematically illustrating one example of the optical recording medium of the present invention. An optical recording medium 10 shown in Fig. 1 is obtained by laminating a substrate 1, an alignment film 2, a recording layer 3 comprising a thin film of a uniaxially aligned optical recording material, another alignment film 2, a reflective layer 4, a protective layer 5 and another substrate 1 in this order.

Now, a typical method for producing an optical recording medium will be explained below. First, a solution containing a material for an alignment film is applied on a substrate by a spin coating method, a bar coating method, a doctor blade method or the like and dried to form an alignment film. This alignment film is rubbed in one direction employing cloth or paper to carry out rubbing treatment. Then, an optical recording material is dissolved in a proper solvent or melted by heating and applied on the above alignment film to form a thin film with a predetermined thickness. Another substrate provided with an alignment film is overlaid thereon and press-bonded under reduced pressure or press-bonded by heating to prepare an optical recording medium. On that occasion, it is preferred to use a glass or synthetic resin spacer to achieve an accurate film thickness. Finally, annealing treatment at a predetermined temperature or slow cooling is carried out to align the liquid crystal in a uniaxial direction. Further, such a method may be mentioned that a polymerizable material of an optical recording material is injected between two substrates provided with an alignment film which is aligned (for example, in a cell comprising two substrates) and the liquid crystalline monomer is aligned in a uniaxial direction, and the polymerizable material is photopolymerized in a state where the liquid crystalline monomer is aligned. By such photopolymerization, a recording layer comprising a thin film of the optical recording material of the present invention is formed between substrates.

Now, an optical recording and reproducing method employing the optical recording medium of the present invention will be explained below. Optical recording (writing of information signals by light) is carried out in such a manner that information signals comprising light having a wavelength which changes the steric configuration of the diarylethene compound in a temperature region near Tc of the optical recording material to change the alignment of the liquid crystal at a portion irradiated with light by light excitation of the diarylethene compound and thereby to record the information signals as a difference in Δn with a portion not irradiated with light. The wavelength of the light has to be, for example, in such a wavelength region that an open form and a closed form of the diarylethene compound absorb light in that region. Further, reproduction (reading of information signals by light) is carried out by modulation of linearly polarized light. That is, it is carried out by modulation (detection of a difference in intensity) of intensity of light obtained by a linearly polarized light with an optional wavelength being transmitted through or reflected on the optical recording material and then being transmitted through an analyzer. Further, erasing (erasing of the recorded information signals) is carried out by heating the optical recording material at a temperature of its Tc or higher.

As mentioned above, recording of the information signals on the optical recording material is carried out by applying light having information signals at a temperature within a range of from Tc when the polymer liquid crystal contains an open form diarylethene compound to Tc when the polymer liquid crystal contains a closed form. The temperature at the time of recording (writing) is preferably near either Tc, particularly preferably Tc±1. Further, the recorded information signals are read preferably at the recording temperature.

Further, the recorded information signals can be erased by holding the optical recording material at a temperature of Tc of the polymer liquid crystal or higher. The higher the temperature above Tc, the shorter the erasing time. When there is a risk that the recording medium or the like is held in an atmosphere at relatively high temperatures, it is preferred to employ a polymer liquid crystal having a high Tc in order to prevent the record from being erased. Accordingly, as mentioned above, Tc is preferably at least 70°C, particularly preferably at least 120°C.

The optical recording medium of the present invention can be applied to various recording methods, specifically, for example, hologram recording, multilayer recording and near-field recording.

### EXAMPLES

Now, the present invention will be specifically explained with reference to Examples. However, the present invention is by no means restricted to such specific Examples.

### PREPARATION EXAMPLE 1

(1) Preparation of 3,5-dibromo-2-methylthiophene (Compound I-1)
   Into a 1,000 ml four-necked flask, 25.4 g (0.258 mol) of 2-methylthiophene and 300 ml of acetic acid were added, and the temperature was kept at 0°C by ice bath. Then, 82.5 g (0.516 mol) of bromine was slowly dropped from a dropping funnel, and after the dropping, 20 ml of acetic acid was further added to wash the dropping funnel. Stirring was carried out for 30 minutes while keeping the temperature at 0°C, and then the ice bath was removed, and stirring was carried out overnight while the temperature was recovered to room temperature. The solution was neutralized with sodium carbonate, a sodium thiosulfate aqueous solution was added, extraction with ether was carried out, and the ether phase was washed with a saline solution and dried over magnesium sulfate. Magnesium sulfate was removed by filtration, and ether was distilled off. The resulting product was eluted with hexane and a component of Rf=0.83 was isolated by means of a silica gel column. The component was further subjected to distillation under reduced pressure to isolate a component having a boiling point of from 88 to 90°C. The amount of the obtained compound I-1 was 34.7 g, the yield was 52.5 mass%, and results of NMR analysis were as follows.
   ¹H-NMR(CDCl₃) : *δ*=2.34 (s, 3H,Me), 6.86 (s, 1H,aromatic proton)
(2) Preparation of 3-bromo-2-methyl-5-thiopheneboric acid (Compound I-2)
   Into a 2,000 ml three-necked flask, 34.7 g (0.136 mol) of the above obtained compound I-1 and 500 ml of anhydrous ether were added and cooled to -60°C or below. Then, 87.6 ml of 1.6 N n-butyl lithium was added, followed by stirring for 30 minutes. Then, 54.6 ml of tri-n-butyl borate was added thereto and kept at -60°C or below for 4 hours, and after the temperature was recovered to room temperature, stirring was carried out further for 15 hours, and water was added to terminate the reaction. 1.2 N hydrochloric acid was added thereto, and extraction with ether was carried out. The obtained ether phase was further extracted with a 1.0 N sodium hydroxide aqueous solution. Then, ether was removed, and concentrated hydrochloric acid was added to the aqueous phase kept at 0°C until pH became 1, whereby crystals were deposited. The crystals were subjected to suction filtration and vacuum dried to obtain a white powder. Similarly, the powder was subjected to extraction with ether and extraction with sodium hydroxide, and crystals were deposited in concentrated hydrochloric acid and dried to obtain compound I-2. The amount of the compound I-2 was 21.6 g, the yield was 72.2 mass%, and results by NMR analysis were as follows.
   ¹H-NMR (CDCl₃) : *δ* = 2.46 (s, 3H, Me), 7.35 (s, 1H, aromatic proton)
(3) Preparation of 4-iode-4'-octyloxybiphenyl (Compound I-3)
   Into a 1,000 ml three-necked flask, 37.0 g (0.132 mol) of 4'-iodobiphenyl-4-ol, 26.8 g (0.139 mol) of 1-bromooctane, 61.6 g (0.446 mol) of potassium carbonate, 3.75 g (22.6 mmol) of potassium iodide and 500 ml of anhydrous acetone were added, followed by reflux under heating at 65°C for 18 hours in an argon atmosphere. Then, the temperature was recovered to room temperature, and solid matter was removed by filtration, and acetone was distilled off from the filtrate. The resulting product was eluted and separated with chloroform/hexane by means of a silica gel column, followed by recrystallization to obtain compound I-3. The amount of the compound I-3 was 49.5 g, the yield was 91.9 mass%, and results of NMR analysis were as follows.
   ¹H-NMR(CDCl₃) : *δ*=0.86-0.91(t,3H,Me), 1.25-1.84(m,12H,CH₂), 3.96-4.00(t,2H,CH₂O), 6.92-7.74(m,8H, aromatic proton).
(4) Preparation of 3-bromo-2-methyl-5-(4'-octyloxybiphenyl-4-yl)thiophene (Compound I-4)
   Into a 500 ml three-necked flask, 10.0 g (45.3 mmol) of the above obtained compound I-2, 70 ml of tetrahydrofuran, 70 ml of a sodium carbonate aqueous solution (20 mass%), 27.7 g (68.0 mmol) of the above obtained compound I-3 and 2.36 g of tetrakis (triphenylphosphine) palladium (0) were added, followed by reflux under heating at 70°C for 2.5 hours in an argon atmosphere. Then, the temperature was recovered to room temperature, extraction with ether was carried out, and the ether phase was washed with a saturated sodium hydrogen carbonate aqueous solution and water and then dried over magnesium sulfate. Magnesium sulfate was removed by filtration, and ether was distilled off. The resulting product was eluted and separated with hexane by means of a silica gel column, followed by recrystallization to obtain compound I-4. The amount of the compound I-4 was 11.9 g, the yield was 57.6 mass%, and results by NMR analysis were as follows.
   ¹H-NMR(CDCl₃) : *δ* = 0.87-0.92(t, 3H, Me), 1.30-1.99(m,12H,CH₂), 2.16(s,3H,Me), 3.97-4.02(t,2H,CH₂O), 6.95-7.60(m,8H,aromatic proton), 6.90(s,1H,CH of thiophene)
(5) Preparation of 1,2-bis(5-(4-octyloxybiphenyl)-2-methylthiophen-3-yl)perfluorocyclopentene (diarylethene compound (I))
   Into a 500 ml three-necked flask, 11.9 g (26.1 mmol) of the above obtained compound I-4 and 200 ml of tetrahydrofuran were added, and while keeping the temperature at -60°C or below, 17.5 ml (27.4 mmol) of 1.6 N n-butyl lithium was slowly dropped drop by drop. Then, the dropping funnel was washed with 10 ml of tetrahydrofuran, followed by stirring for 45 minutes. While keeping the temperature at -60°C or below, 0.9 ml (11.7 mmol) of perfluorocyclopentene was slowly dropped. After stirring for 2 hours, ethanol and water were added while the temperature was recovered to room temperature. Extraction with ether was carried out, and the ether phase was washed with 1.2 N hydrochloric acid and water and then dried over magnesium sulfate. Magnesium sulfate was removed by filtration, and ether was distilled off. The resulting product was separated with hexane alone by means of a silica gel column, and purification by recrystallization was carried out to obtain diarylethene compound (I). The amount of the diarylethene compound (I) was 7.0 g, the yield was 31.4 mass%, and results of NMR analysis were as follows.
   ¹H-NMR(CDCl₃) : *δ* = 0.87-0.92(t, 6H, Me), 1.30-1.99(m,24H,CH₂), 1.99(s,6H,Me), 3.97-4.02(t, 4H, CH₂O), 6.95-7.60(m,16H,aromatic proton), 7.30(s,2H,CH of thiophene)

### PREPARATION EXAMPLE 2

(1) Preparation of [4-(4-bromo-5-methyl-thiophen-2-yl)-phenyl]dimethylamine (Compound II-1)
   Into a 500 ml three-necked flask, 10.0 g (45.3 mmol) of the above obtained compound I-2, 70 ml of tetrahydrofuran, 70 ml of a sodium carbonate aqueous solution (20 mass%), 16.8 g (68.0 mmol) of (4-iodophenyl)-dimethylamine and 2.36 g of tetrakis (triphenylphosphine)palladium (0) were added, followed by reflux under heating at 70°C for 2.5 hours in an argon atmosphere. Then, the temperature was recovered to room temperature, extraction with ether was carried out, and the ether phase was washed with a saturated sodium hydrogen carbonate aqueous solution and water and then dried over magnesium sulfate. Magnesium sulfate was removed by filtration, and ether was distilled off. The resulting product was eluted and separated with hexane by means of a silica gel column, followed by recrystallization to obtain compound II-1. The amount of the compound II-1 was 7.7 g, the yield was 57.6 mass%, and results of NMR analysis were as follows.
   ¹H-NMR(CDCl₃) : *δ*=2.38 (s, 3H,Me), 2.97 (s, 6H,NMe₂), 6.67-6.70(d,2H,aromatic proton), 7.24-7.71(d,2H,aromatic proton), 6.92(s,1H,CH of thiophene)
(2) Preparation of 1,2-bis(5-(4-(N,N-dimethylamino)-2-methylphenyl)-thiophen-3-yl)perfluorocyclopentene (diarylethene compound (II))
   Into a 500 ml three-necked flask, 7.7 g (26.1 mmol) of the above obtained compound II-1 and 200 ml of tetrahydrofuran were added, and while keeping the temperature at -60°C or below, 17.5 ml (27.4 mmol) of 1.6 N n-butyl lithium was slowly dropped drop by drop. Then, the dropping funnel was washed with 10 ml of tetrahydrofuran, followed by stirring for 45 minutes. While keeping the temperature at -60°C or below, 0.9 ml (11.7 mmol) of perfluorocyclopentene was slowly dropped. After stirring for 2 hours, ethanol and water were added while the temperature was recovered to room temperature. Extraction with ether was carried out, and the ether phase was washed with 1.2 N hydrochloric acid and water and then dried over magnesium sulfate. Magnesium sulfate was removed by filtration, and ether was distilled off. The resulting product was separated with hexane alone by means of a silica gel column, and purification was carried out by recrystallization to obtain diarylethene compound (II). The amount of the diarylethene compound (II) was 5.0 g, the yield was 31.4 mass%, and the melting point and results of NMR analysis were as follows.
   ¹H-NMR(CDCl₃): *δ*=2.06 (s, 6H, Me), 2.97 (s, 12H, NMe₂), 6.67-6.70(d,4H,aromatic proton), 7.24-7.71(d,4H,aromatic proton), 7.20(s,2H,CH of thiophene)

### PREPARATION EXAMPLE 3

(1) Preparation of 2-methylbenzothiophene (Compound III-1)
   In a 1,000 ml three-necked flask, 25.0 g (186.5 mmol) of benzothiophene and 500 ml of tetrahydrofuran were added, and while keeping the temperature at -60°C or below, 75.0 ml (195.0 mmol) of 2.6 N n-butyl lithium were slowly dropped drop by drop. Then, the dropping funnel was washed with 30 ml of tetrahydrofuran, followed by stirring for 30 minutes. While keeping the temperature at -60°C or below, 14.3 ml (230.0 mmol) of methyl iodide was slowly dropped. After stirring for 1 hour, methanol was added while the temperature was recovered to room temperature. After reaction, the resulting reaction solution was poured in 150 ml of a saturated sodium thiosulfate aqueous solution, extraction with 300 ml of diethyl ether was carried out three times, and the ether phase was washed and dried, and then the solvent was distilled off under reduced pressure. The obtained reaction product was purified by silica gel column chromatography to obtain 24.7 g (yield 89.5%) of compound III-1.
(2) Preparation of 3-bromo-2-methylbenzothiophene (Compound III-2)
   Into a 1,000 ml three-necked flask, 24.7 g (166.9 mmol) of the above obtained compound III-1 and 500 ml of acetic acid were added, and 9.30 ml (183.6 mmol) of bromine was slowly dropped at room temperature. After stirring for 5 hours, a saline solution was added. After reaction, the resulting reaction solution was extracted with 300 ml of chloroform three times, and the chloroform phase was neutralized with a saturated sodium carbonate aqueous solution and washed with a saturated sodium thiosulfate aqueous solution and dried, and then the solvent was distilled off under reduced pressure. The obtained reaction product was purified by silica gel column chromatography to obtain 34.2 g (yield 90.7 mass%) of compound III-2.
(3) Preparation of 1,2-bis(2-methylbenzothiophen-3-yl)perfluorocyclopentene (Compound III-3)
   Into a 1,000 ml three-necked flask, 34.2 g (151.3 mmol) of the above obtained compound III-2 and 600 ml of tetrahydrofuran were added, and while keeping the temperature at -60°C or below, 64.0 ml (166.4 mmol) of 2.6 N n-butyl lithium was slowly dropped drop by drop. Then, the dropping funnel was washed with 30 ml of tetrahydrofuran, followed by stirring for 45 minutes. 5.85 ml (76.0 mmol) of perfluorocyclopentene was slowly dropped while keeping the temperature at -60°C or below. After stirring for 2 hours, ethanol and water were added while the temperature was recovered to room temperature. Extraction with ether was carried out, and the ether phase was washed with 1.2 N hydrochloric acid and water and then dried over magnesium sulfate. Magnesium sulfate was removed by filtration, and ether was distilled off. The resulting product was purified by silica gel column chromatography and purified by recrystallization to obtain compound III-3. The amount of the compound III-3 was 25.8 g, the yield was 36.4 mass%, and results of NMR analysis were as follows.
   ¹H-NMR(CDCl₃): *δ*=2.21(s,3H,Me), 2.49(s,3H,Me), 7.16-7.70(m,8H,aromatic proton)
(4) Preparation of 1,2-bis(6-acetyl-2-methylbenzothiophen-3-yl)perfluorocyclopentene (Compound III-4)
   Into a 1,000 ml three-necked flask, 25.8 g (55.1 mmol) of the above obtained compound III-3 and 500 ml of nitrobenzene were added, followed by stirring at room temperature for 30 minutes. Then, 22.2 g (284.01 mmol) of acetyl chloride and 38.7 g (284.01 mmol) of aluminum chloride were slowly dropped. After stirring for 1 hour, diluted hydrochloric acid was added at room temperature. Extraction with chloroform was carried out, and the chloroform phase was washed with water and dried over magnesium sulfate. Magnesium sulfate was removed by filtration, and chloroform was distilled off. The resulting product was purified by silica gel column chromatography and purified by recrystallization to obtain compound III-4. The amount of the compound III-4 was 24.5 g, the yield was 80.5 mass%, and results of NMR analysis were as follows.
   ¹H-NMR(CDCl₃) : *δ*=2.27 (s, 3H,Me), 2.54 (s, 3H,Me), 2.59(s,3H,COMe), 2.66(s,3H,COMe), 7.58-8.33(m,6H,aromatic proton)
(5) Preparation of 1,2-bis(6-carboxy-2-methylbenzothiophen-3-yl)perfluorocyclopentene (Compound III-5)
   Into a 1,000 ml three-necked flask, 24.5 g (44.4 mmol) of the above obtained compound III-4 and 200 ml of dioxane were added, followed by stirring at 55°C for 30 minutes. Then, a 10% sodium hypochlorite solution and 100 ml of dioxane were slowly dropped. Then, the resulting mixture was heated to 80°C and stirred for 3 hours, and a sodium sulfite aqueous solution was added. The mixture was poured into water and extracted with chloroform. Concentrated sulfuric acid was put in the aqueous layer, whereupon precipitates of compound III-5 were deposited. Further, the organic layer was dried, and chloroform was distilled off to obtain compound III-5. They were purified by recrystallization, whereupon the amount of compounds III-4 and 5 was 21.1 g, the yield was 85.5 mass%, and results of NMR analysis were as follows.
   ¹H-NMR(CDCl₃) : *δ*=2.25 (s,3H,Me), 2.53(s,3H,Me), 7.54-8.23(m,6H,aromatic proton)
(6) Preparation of 4'-hexyloxy-biphenyl-4-ol (Compound III-6)
   Into a 500 ml three-necked flask, 10.0 g (60.9 mmol) of 1-bromohexane, 27.2 g (146.2 mmol) of 4,4'-biphenol, 500 ml of acetone, 25.6 g (185.2 mmol) of potassium carbonate and 1.4 g (8.4 mmol) of potassium iodide were added, followed by stirring at 65°C for 12 hours. After reaction, the resulting reaction solution was extracted with 300 ml of chloroform three times, and the chloroform phase was washed with water and dried over magnesium sulfate. Magnesium sulfate was removed by filtration, and chloroform was distilled off. The resulting product was purified by silica gel column chromatography and purified by recrystallization to obtain compound III-6. The amount of the compound III-6 was 12.4 g, the yield was 75.4 mass%, and results of NMR analysis were as follows.
   ¹H-NMR(CDCl₃) : *δ*=0.88-0.93 (t, 3H,Me), 1.31-1.84 (m, 8H, CH₂), 3.96-4.00(t,2H,CH₂O), 4.73(s,1H,OH), 6.85-7.46(m,8H,aromatic proton)
(7) Preparation of 1,2-bis(6-(4'-hexyloxy-4-biphenylyloxycarbonyl)-2-methylbenzothiophen-3-yl)perfluorocyclopentene (diarylethene compound (III))
   Into a 1,000 ml three-necked flask, 21.1 g (38.0 mmol) of the above obtained compound III-5 and 500 ml of thionyl chloride were added, followed by stirring at 65°C for 4 hours. After reaction, thionyl chloride was distilled off under reduced pressure. Then, 22.6 g (83.6 mmol) of the above obtained compound III-6, 8.44 g (83.6 mmol) of triethylamine and 600 ml of toluene were added, followed by stirring at 65°C for 12 hours. After reaction, the resulting reaction solution was filtrated and then toluene was distilled off under reduced pressure, and the resulting product was purified by silica gel column chromatography and purified by recrystallization to obtain diarylethene compound (III). The amount of the diarylethene compound (III) was 24.7 g, the yield was 61.3 mass%, and results of NMR analysis were as follows.
   ¹H-NMR(CDCl₃) : *δ* =0.86-0.94 (t, 6H, Me), 1.25-1.83(m, 16H, CH₂), 2.33(s,3H,Me), 2.57(s, 3H, Me), 3.98-4.03(t,4H,CH₂O), 6.95-8.62(m,22H,aromatic proton)

### PREPARATION EXAMPLE 4

### Preparation of polymer liquid crystal

In an ampul with the atmosphere therein replaced with nitrogen, 0.4 g of a liquid crystal monomer represented by the following formula (6-1), 0.5 ml of dimethylformamide (DMF) and 0.08 g of azobisisobutyronitrile (AIBN) were placed and polymerized at 80°C for 18 hours to prepare a polymer liquid crystal. The obtained solution was poured into methanol to carry out purification by reprecipitation. The number average molecular weight of the polymer liquid crystal was about 4,000, and the temperature range within which the liquid crystalline phase was exhibited (Tg to Tc) was from 30°C to 127°C. In the following formula, Ph represents a 1,4-phenylene group.

CH₂=CHCOO(CH₂)₆-O-Ph-Ph-CN (6-1)

### EXAMPLE 1

The diarylethene compound (I) prepared in Preparation Example 1 exhibited nematic liquid crystallinity when the temperature was lowered. Its open form had a Tc of 132°C, and its closed form had a Tc of 116°C.

A solution of a polyimide as a material for an alignment film was applied on one side of each of two glass plates by a spin coater, heat treated and dried, and rubbing treatment was applied to the surface of each alignment film thus formed with nylon cloth in a certain direction to prepare bases. The two bases were bonded by means of an adhesive so that the alignment film faces faced each other to prepare a cell. On that occasion, glass beads were mixed with the adhesive, and the space in the cell was adjusted to 9 µm. All cells used in the following Examples and Comparative Examples are cells prepared by this method.

The diarylethene compound (I) was injected into the above cell at 220°C and irradiated with white light (halogen lamp, the same applies hereinafter) for 10 minutes. This cell was slowly cooled to 122°C, whereupon the diarylethene compound was transparent and exhibited favorable nematic liquid crystallinity.

The diarylethene compound (I) in the cell was irradiated with ultraviolet light (λ=405 nm, 30 mW/cm²) at 122°C, whereupon phase change from the nematic phase to the isotropic phase occurred accompanying photoisomerization of the diarylethene compound (I). A change in absorption spectrum between before and after irradiation with ultraviolet light is shown in Fig. 2. Δn between a portion irradiated with light and a portion not irradiated with light was measured by means of birefringence measurement employing a 830 nm laser and as a result, it was 0.11. Further, the record was erased when the diarylethene compound (I) was heated to 220°C or higher. The results are shown in Table 1.

### EXAMPLE 2

The diarylethene compound (I) was injected into a cell at 220°C and irradiated with ultraviolet light (λ=365 nm, 3.4 mW/cm²) for 5 minutes. The change in absorption spectrum was as shown in Fig. 2. The cell was slowly cooled to 130°C, whereupon the diarylethene compound (I) was transparent and exhibited favorable isotropic phase. The diarylethene compound (I) in the cell was irradiated with visible light (λ=633 nm, 10 mW/cm²) at 130°C, whereupon the phase change from the isotropic phase to the nematic phase occurred accompanying photoisomerization of the diarylethene compound (I). Δn between a portion irradiated with light and a portion not irradiated with light was measured by means of birefringence measurement employing a 830 nm laser and as a result, it was 0.02. The absorption spectrum after irradiation with visible light recovered to the absorption spectrum before irradiation with ultraviolet light shown in Fig. 2. Further, the record was erased when the diarylethene compound was heated to 220°C or higher. The results are shown in Table 1.

### EXAMPLE 3

The diarylethene compound (I) was injected into a cell at 220°C and irradiated with white light for 5 minutes. The cell was slowly cooled to room temperature, whereupon the diarylethene compound exhibited a supercooled nematic phase. The diarylethene compound (I) in the cell was irradiated with ultraviolet light (λ=365 nm, 3.4 mW/cm²) at room temperature, whereupon a change in alignment occurred accompanying photoisomerization of the diarylethene compound (I), and the degree of alignment of the nematic liquid crystal decreased. Δn between a portion irradiated with light and a portion not irradiated with light was measured by means of an automatic birefringence measuring apparatus and as a result, it was 0.04. It was further irradiated with visible light, whereupon the absorption spectrum recovered to the absorption spectrum before irradiation with ultraviolet light shown in Fig. 2. Further, the record was erased when the diarylethene compound was heated to 220°C or higher. The results are shown in Table 1.

### EXAMPLE 4

14.0 Parts by mass of the diarylethene compound (I) prepared in Preparation Example 1 was added to 100 parts by mass of the liquid crystal polymer prepared in Preparation Example 4 to produce a liquid crystal composition 1. The liquid crystal composition 1 containing an open form had a Tc of 111°C, and the liquid crystal composition containing a closed form had a Tc of 105°C.

The liquid crystal composition 1 was injected into a cell at 150°C and irradiated with white light for 10 minutes. The cell was slowly cooled to 106°C, whereupon the liquid crystal composition was transparent and exhibited favorable nematic liquid crystallinity. The diarylethene compound (I) in the cell was irradiated with ultraviolet light (λ=405 nm, 30 mW/cm²) at 106°C, whereupon a phase change from the nematic phase to the isotropic phase occurred accompanying photoisomerization of the diarylethene compound (I). Δn between a portion irradiated with light and a portion not irradiated with light was measured by means of birefringence measurement employing a 830 nm laser and as a result, it was 0.05. Further, the record was erased when the liquid crystal composition was heated to 220°C or higher. The results are shown in Table 1.

### EXAMPLE 5

The liquid crystal composition 1 was injected into a cell at 150°C and irradiated with ultraviolet light for 5 minutes. The cell was slowly cooled to 108°C, whereupon the liquid crystal composition was transparent and exhibited favorable isotropic phase. The diarylethene compound (I) in the cell was irradiated with visible light (λ=633 nm, 10 mW/cm²) at 108°C, whereupon a phase change from the isotropic phase to the nematic phase occurred accompanying photoisomerization of the diarylethene compound (I). Δn between a portion irradiated with light and a portion not irradiated with light was measured by means of birefringence measurement employing a 830 nm laser and as a result, it was 0.04. Further, the record was erased when the liquid crystal composition was heated to 220°C or higher. The results are shown in Table 1. EXAMPLE 6

The diarylethene compound (III) prepared in Preparation Example 3 exhibited a nematic phase and a smectic phase when the temperature was lowered. Its open form had a Tc of 144°C, and exhibited a nematic phase from 144°C to 133°C and exhibited a smectic phase from 133°C to 113°C. Its closed form had a Tc of 142°C, and exhibited a nematic phase from 142°C to 131°C and exhibited a smectic phase from 131°C to 111°C.

The diarylethene compound (III) was injected into a cell at 220°C and irradiated with white light for 5 minutes. The cell was slowly cooled to 143°C, whereupon the diarylethene compound (III) was transparent and exhibited favorable nematic liquid crystallinity. The diarylethene compound (III) in the cell was irradiated with ultraviolet light (λ=254 nm, 2.9 mW/cm²) at 143°C, whereupon photoisomerization of the diarylethene compound (III) occurred (the color changed to pink) but no phase change occurred. Further, the cell was slowly cooled to 133°C, whereupon the diarylethene compound (III) was transparent and exhibited favorable smectic liquid crystallinity. The diarylethene compound (III) in the cell was irradiated with ultraviolet light (λ=254 nm, 2.9 mW/cm²) at 133°C, whereupon photoisomerization of the diarylethene compound (III) occurred (the color changed to pink) but no phase change occurred. The results are shown in Table 1.

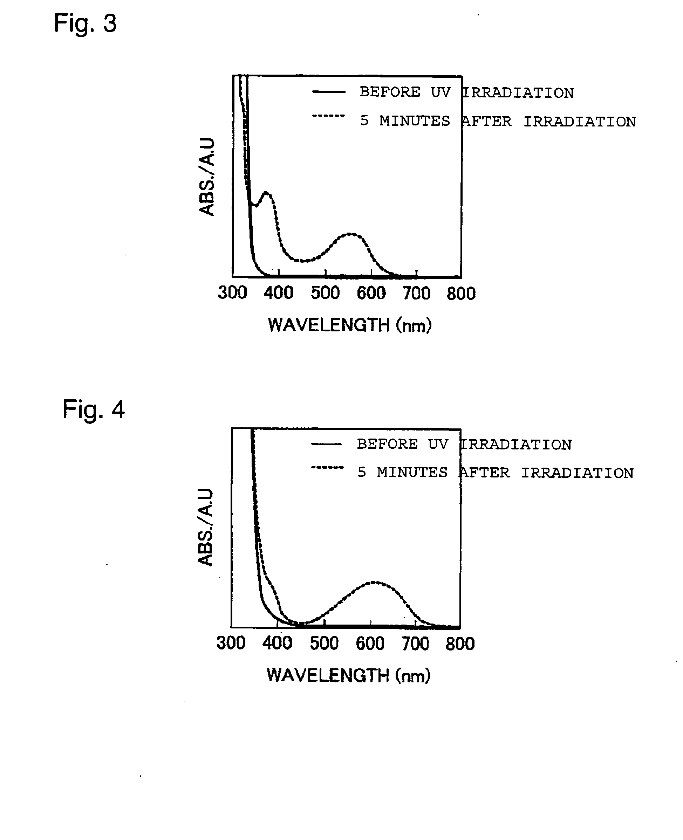

A change in absorption spectrum between before and after irradiation with ultraviolet light is shown in Fig. 3.

### COMPARATIVE EXAMPLE 1

The diarylethene compound (II) prepared in Preparation Example 2 was amorphous and did not exhibit liquid crystallinity.

The diarylethene compound (II) was injected into the cell at 200°C and irradiated with white light for 10 minutes. This cell was slowly cooled to 20°C, but no change occurred.

The diarylethene compound (II) in the cell was irradiated with ultraviolet light (λ=365 nm, 3.4 mW/cm²) at 120°C, whereupon photoisomerization of the diarylethene compound (II) occurred, but no phase change occurred. The change in absorption spectrum between before and after irradiation with ultraviolet light is shown in Fig. 4. Δn between a portion irradiated with light and a portion not irradiated with light was measured by means of measurement of a change in degree of alignment employing a 830 nm laser, whereupon it was not more than the detection limit. The results are shown in Table 1.

**TABLE 1**

| | Liquid crystallinity | Change by light | Δn | RW |
|---|---|---|---|---|
| Ex. 1 | Nematic phase (N phase) | N phase to isotropic phase | 0.11 | ○ |
| Ex. 2 | N phase | Isotropic phase to N phase | 0.02 | ○ |
| Ex. 3 | N phase | High degree of alignment to low degree of alignment | 0.04 | O |
| Ex. 4 | N phase | N phase to isotropic phase | 0.05 | ○ |
| Ex. 5 | N phase | Isotropic phase to N phase | 0.04 | ○ |
| Ex. 6 | N phase, smectic phase | No phase change No phase change | - | - |
| Comp. Ex. 1 | Nil | No phase change | - | - |

In Table 1, "RW" represents evaluation whether repeated recording and erasing are possible or not. In each Example, an operation comprising recording and then erasing was carried out ten times, and in Table 1, "O" represents that the value Δn and reliability of the recording material were acceptable.

### INDUSTRIAL APPLICABILITY

The optical recording material of the present invention employing the photochromic liquid crystal of the present invention is capable of performing light modulation, when irradiated with light near Tc thereof, so that it can be applied to photo operator devices, optical memories, and the like. Further, when the optical recording material of the present invention is employed as an optical recording medium, the optical recording medium is excellent in durability against repeated use. Therefore, the optical recording medium of the present invention is useful as being applicable to optical disks, optical memory cards, and the like.

## Claims

1. A photochromic liquid crystal which comprises a photochromic diarylethene compound having a mesogen group in each of the two aryl groups and which has liquid crystallinity.

2. The photochromic liquid crystal according to Claim 1, of which the clearing point (Tc) changes by photoisomerization.

3. The photochromic liquid crystal according to Claim 1, of which the alignment changes by photoisomerization.

4. The photochromic liquid crystal according to any one of Claims 1 to 3, wherein the photochromic diarylethene compound is represented by the following formula (1): 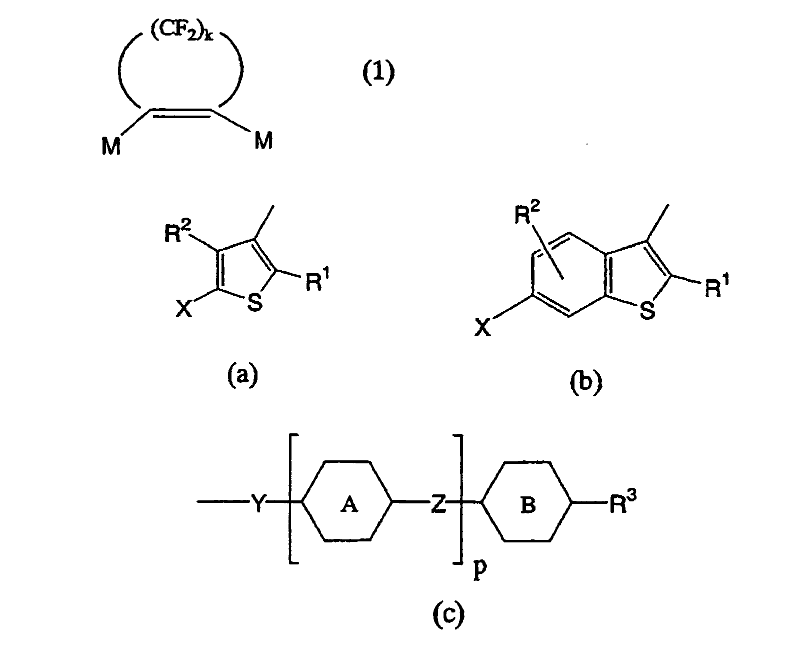 in the formula (1), each M represents the above formula (a) or the formula (b), and k is an integer of from 3 to 6, provided that X represents the above formula (c), R¹ represents an alkyl group which may have a substituent or an alkoxy group which may have a substituent, R² represents a hydrogen atom, a cyano group, a nitro group, an alkyl group which may have a substituent, or an alkoxy group which may have a substituent, R³ represents a C₄-C₁₂ alkyl group which may have a substituent, or a C₄-C₁₂ alkoxy group which may have a substituent, Y represents a single bond, -COO-, -OCO-, -CH=CH-, -CF=CF- or -C ≡ C-, Z represents a single bond, -CH=CH-, -CF=CF- or -C ≡ C-, each of A and B which are independent of each other, represents a phenylene ring, a trans-cyclohexylene ring or a nitrogen-containing hetero 6-membered ring, which may have a substituent, and p represents 1 or 2.

5. The photochromic liquid crystal according to Claim 4, wherein in the formula (1), each of A and B is a phenylene ring which may have a substituent, and each of Y and Z is a single bond.

6. An optical recording material comprising a side-chain polymer liquid crystal containing the photochromic liquid crystal as defined in any one of Claims 1 to 5.

7. An optical recording medium having a recording layer comprising the optical recording material as defined in Claim 6, having alignment treatment applied in a uniaxial direction.
